# EUROPÄISCHE PATENTSCHRIFT

(11) **EP 0 936 973 B1**
(45) Veröffentlichungstag und Bekanntmachung des Hinweises auf die Patenterteilung: **18.10.2000**
(21) Anmeldenummer: 97950109.5
(22) Anmeldetag: 05.11.1997
(51) Int. Cl.: B32B 27/04, C08L 83/04, C09J 7/02, B32B 7/06

(54) **MEHRSCHICHTIGER VERBUNDKÖRPER**
MULTILAYER COMPOSITE BODY
CORPS COMPOSITE MULTICOUCHE

(30) Priorität: 08.11.1996 DE 19646212
(43) Veröffentlichungstag der Anmeldung: 25.08.1999
(73) Patentinhaber: Pelikan Scotland Limited, High Wycombe, Buckinghamshire HP12 3RE (GB)
(72) Erfinder: HOGARTH, Ian, W., Aberdeenshire AB53 4AU (GB); WILKINSON, Robert, I., Aberdeenshire AB53 4NX (GB); ROTHWELL, Rachel, F., Aberdeenshire AB51 4EW (GB)
(74) Vertreter: Hagemann, Heinrich, Dr.rer.nat., Dipl.-Chem.
(86) Internationale Anmeldenummer: EP9706120
(87) Internationale Veröffentlichungsnummer: WO9821031

(56) Entgegenhaltungen:
- WO-A-89/12549
- DE-A- 4 114 964

## Beschreibung

Die vorliegende Erfindung betrifft einen mehrschichtigen Verbundkörper, aufweisend einen flexiblen Hilfsträger und eine auf mindestens einer Seite des Hilfsträgers angeordnete Trennschicht, die die vollständige Trennung oder die lokale begrenzte Ablösung einer hiermit in flächigem Kontakt befindlichen Funktionsschicht modifiziert.

Ein mehrschichtiger Verbundkörper der angesprochenen Art ist z.B. die Schutzfolie für selbstklebende Oberflächendekorfolien, selbstklebende Etiketten, einseitig oder beidseitig haftfähige Klebebänder usw. Der mehrschichtige Verbundkörper kann auch lediglich einen kleinen Teil eines kommerziellen Produkts darstellen, z.B. die Schutzfolie einer selbstklebenden Lasche eines Briefumschlags. Der mehrschichtige Verbundkörper kann auch die Schutzfolie eines selbstklebenden Wundverbands sein. Diesen Anwendungsfällen ist gemeinsam, daß die Funktionsschicht eine druckempfindliche Klebstoff- bzw. Haftklebeschicht ist und der Verbundkörper einen Träger bzw. eine Schutzfolie darstellt, die ein Verschmutzen der Klebstoffschicht bzw. ein unerwünschtes Haften an Flächen vermeidet. Vor der Verwendung wird dieser Träger bzw. die Schutzfolie abgezogen.

Einen anderen Anwendungsfall stellen Anwendungen dar, bei denen auf einem Träger aus einer Schmelze, Lösung und/oder Dispersion eine Funktionsschicht erzeugt wird und der Träger unverzüglich oder bei einer späteren Anwendung wieder entfernt wird. Als Beispiel sind hierbei mehrschichtige Korrekturbänder zu erwähnen, bei denen auf einem Träger eine pigmentierte Abdeckschicht und hierauf meist eine Haftkleberschicht ausgebildet werden. Dieses Laminat dient zum Abdecken fehlerhafter Schriftzeichen. Weiter lassen sich Farbtransferbänder, z.B. Thermotransferbänder, anführen, bei denen auf einem Träger eine Farbtransferschicht angeordnet ist. Beim Druckvorgang wird die Farbtransferschicht z.B. durch einen erwärmten Druckkopf bildmäßig von dem Träger abgelöst und auf ein aufnehmendes Substrat übertragen.

Der flexible Hilfsträger des Verbundkörpers ist überwiegend Papier, es gibt jedoch einen starken Trend hin zu Foliensubstraten, weil aufgrund der erhöhten Festigkeit von Folien gegenüber Papier die Dicke des flexiblen Hilfsträgers aus wirtschaftlichen und, beim Aufrollen, aus Kapazitätsgründen verringert werden kann. Zur Erleichterung der Trennung zwischen Hilfsträger und Funktionsschicht ist zwischen Hilfsträger und Funktionsschicht eine Trennschicht ausgebildet, die üblicherweise Polyorganosiloxane enthält. Foliensubstrate haben hierbei den Vorteil, daß ihre Oberflächen im Vergleich zu Papier nicht porös sind und deshalb in wirtschaftlich vorteilhafter Weise geringere Mengen Polyorganosiloxan zur Beschichtung eingesetzt werden können. Diese geringere Oberflächenrauhheit stellt aber zugleich einen Hauptnachteil der verwendeten Foliensubstrate dar, denn eine glatte Trägerschicht bedingt eine glatte Beschichtung. Diese glatte Oberfläche führt wiederum zu Problemen bei der Handhabung.

Bei Anwendungen, bei denen eine Haftkleberschicht temporär mit einem Träger bedeckt ist, führt die glatte Oberfläche zu einem vollflächigen Kontakt der Haftkleberschicht mit dem Träger, was wiederum dazu führt, daß der Träger nur mit großem Kraftaufwand von der Haftkleberschicht abgetrennt werden kann, was u.U. zum Einreißen von beispielsweise Etiketten führen kann.

Bei Anwendungsfällen, wo aus einer flüssigen Phase eine Schicht auf einen Träger abgeschieden wird, wird beobachtet, daß die Oberfläche der Schicht nach Abziehen des Trägers ein unerwünscht glänzendes Aussehen aufweist, was auf deren glatte Oberfläche zurückzuführen ist. Die glatte Oberfläche der übertragenen Schichten führt außerdem beispielsweise bei einem Korrekturmaterial zu einem erschwerten Beschriften.

Zum besseren Verständnis der nachfolgend dargestellten Erfindung erscheint die Offenbarung US-PS 5 165 976 hilfreich. Diese Patentschrift beschreibt ein Substrat mit einer Release-Schicht. Diese wird dadurch erhalten, indem eine Emulsion eines härtbaren Silicon-Systems und einer teilchenförmigen Komponente, vorzugsweise ein Harz, aufgetragen wird. Das Silicon-System wird unter Hitzeeinwirkung gehärtet. Gleichzeitig wird Wasser entfernt. Hierdurch wird eine Release-Schicht mit einregelbarem Trenneffekt für das Substrat geschaffen, insbesondere im Zusammenhang mit aufgetragenen Haftklebern. Vorzugsweise ist das Substrat Papier, insbesondere billiges poröses Papier. Bei einem Gehalt von etwa 35 Gew.-% an Silicon in der Release-Schicht liegt dieses in kontinuierlicher Phase vor, die die diskreten Teilchen umhüllt. Ein niedrigerer Siliconanteil reicht nicht aus, die Teilchen zu umhüllen, so daß die Eigenschaften der resultierenden Mischung sowohl durch das Silicon als auch durch die Teilchen bestimmt werden. Der Release-Effekt kann daher auch durch das Mengenverhältnis Silicon zu den Teilchen, der Art der Teilchen, dem Grad der Wechselwirkung zwischen dem Silicon und den Teilchen, dem Vernetzungsgrad des gehärteten Silicons und dem Beschichtungsgewicht eingestellt werden. Aus dem Hinweis, daß zum Beschichten des Substrats eine "Emulsion" verwendet wird, ist zu folgern, daß es sich insgesamt um ein flüssiges System handelt, d.h., die emulgierbaren dispergierten Teilchen, die schließlich mehr oder weniger in dem gehärteten Silicon eingebettet bzw. eingebunden sind, stellen keine festen Teilchen dar. Der Silicongehalt in der Release-Schicht liegt zwischen 5 und 80 Gew.-%, vorzugsweise zwischen etwa 20 und 40 Gew.-%, bezogen auf die Gesamtmenge der beiden obigen Komponenten. Aus dem Gesamten ergibt es sich, daß die emulgierbaren Teilchen bei größerem Anteil in der Gesamtmasse dem Release-Effekt sgoar entgegenwirken, d.h. die emulgierbaren Teilchen, wenn sie beispielsweise in der zulässigen Menge von 95 Gew.-% vorliegen, schließen den Release-Effekt weitgehend aus bzw. bewirken sogar einen Klebeeffekt. Dies belegt die Art der herangezogenen Teilchen, beispielsweise in Form eines Acrylharzes oder Styrol/Butadien-Harzes (SBR). Im Gegensatz dazu verlangt die nachfolgend dargestellte Erfindung die Einbindung eines festen Füllstoffs in die Trennschicht, der die Eigenschaften des Silicons nicht beeinflußt, sondern zu einer Aufrauhung der Oberfläche der Release- bzw. Trennschicht führt. Die DD 299 522 A5 entspricht inhaltlich in großen Teilen der erörterten US-PS 5 165 976. Als technologischer Hintergrund zur vorliegenden Erfindung seien noch folgende Druckschriften angegeben: DE 27 53 675 A1, DE 41 14 964 A1, DE 38 34 007 A1, DE 26 22 126 C3 und "Adhäsion", 1984, Heft 9, S. 18/19.

Die vorstehend aufgezeigten Probleme des Standes der Technik werden erfindungsgemäß dadurch behoben, daß die Trennschicht eine kontinuierliche Phase und einen teilchenförmigen Füllstoff in einer Konzentration von etwa 0,01 bis 50 Gew.-%, bezogen auf die Trennschicht, enthält, wobei die Oberfläche der Füllstoffteilchen vollständig von der kontinuierlichen Phase bedeckt ist, die kontinuierliche Phase vernetztes Polyorganosiloxan enthält und die Rauhigkeit der dem Hilfsträger abgewandten Oberfläche der Trennschicht eine Rauhtiefe Rt von etwa 400 bis 50000 nm und einen Mittenrauhwert Ra von etwa 40 bis 5000 nm aufweist.

Durch das Einverleiben des Füllstoffs wird die dem Hilfsträger abgewandte Oberfläche der Trennschicht rauh, so daß im Querschnitt ein Höhen und Tiefen aufweisendes Profil gefunden wird ("Berge" bzw. "Täler").

Die Funktionsschicht kann in einer Ausführungsform eine Schicht mit glatter Oberfläche sein. Die Funktionsschicht kommt in diesem Fall nur mit den "Bergen" der rauhen Trennschicht in Berührung, wobei die geringere Kontaktfläche ein leichteres Abtrennen der Funktionsschicht vom Verbundkörper erlaubt. Diese Ausführungsform ist insbesondere für Anwendungen interessant, bei der die Funktionsschicht eine Haftklebeschicht ist. Die Funktionsschicht kann insbesondere eine Klebstoffschicht, insbesondere Haftklebeschicht, eine transparente oder gefärbte Kunststoffschicht. insbesondere eine pigmentierte Schicht, ein Laminat aus einer Klebstoffschicht und einer transparenten oder gefärbten, insbesondere pigmentierten Schicht sein. In einer anderen Ausführungsform steht die Funktionsschicht in völligem Kontakt mit der Trennschicht. Eine Funktionsschicht, beispielsweise die Deckschicht eines Korrekturbandes, kann erfindungsgemäß "matt" bis "durchscheinend" entsprechend eingestellt werden. Mit anderen Worten bedeutet das, daß die Beschichtung, wenn sie später von der Trennschicht gelöst wird, matter wird, wenn man die Erhebungen bzw. die Täler in der füllstoffgefüllten Siliconschicht stärker ausbildet. Bei entsprechend kleinerer Rauhigkeit der Trennschicht tritt diese matte Erscheinung stärker zurück und läßt sich auch auf "glänzend" umstellen.

Nach der Trennung von Funktionsschicht und Trennschicht stellt die nunmehr freiliegende Oberfläche der Funktionsschicht ein "Negativ" der Trennschichtoberfläche dar. Hiermit wird eine mattierte bzw. aufgerauhte Oberfläche der Funktionsschicht erhalten. Dies ist von besonderer Bedeutung bei Schichten, die aus flüssiger Phase auf einen Träger abgeschieden werden, z.B. bei Farbtransferbändern und mehrschichtigen Korrekturbändern. Bei der Trennung bzw. Ablösung der Funktionsschicht verbleibt die Trennschicht auf dem Hilfsträger.

Die Art des eingesetzten Füllstoffs ist nicht kritisch. Beispiele für geeignete Füllstoffe sind u.a. Calciumcarbonat, Diatomeenerde, Tone, hohle Glasperlen, Aluminiumsilikat, Plaster, Magnesiumcarbonat, PTFE und andere polymere teilchenförmige Materialien, Talk, Calcit, Fasern, Kalk, Glimmer, amorphes Siliciumdioxid, Silikate, Pigmente etc.. Der Füllstoff kann also aus einem weiten Bereich ausgewählt werden, wobei er durch die das vernetzte Polyorganosiloxan enthaltende kontinuierliche Phase vollständig benetzt sein sollte, so daß die gesamte Oberfläche der Füllstoffteilchen benetzt ist. Der Füllstoff darf außerdem den Vernetzungsprozeß des Polyorganosiloxans nicht nachteilig beeinflussen. Der Füllstoff muß ferner durch die kontinuierliche Phase fest mit dem flexiblen Hilfsträger verankert werden. Grundsätzlich ist es notwendig, was erfindungsgemäß angestrebt wird, in den Fällen des weitestgehenden "Release-Effekts" bzw. Trenneffektes die Füllstoffteilchen vollständig zu umhüllen. Wenn eine sogenannte "Controlled-Release" bzw. ein eingestelltes Trenn- bzw. Releaseeffekt erreicht werden soll, dann ist es nicht hinderlich, wenn ein geringer Teil der Oberflächen der Füllstoffteilchen unbedeckt ist, beispielsweise bis zu 10%. Diese Situation stellt sich dann ein, wenn in der Gesamtmasse ein relativ hoher Anteil an Füllstoffmaterialien vorliegt, beispielsweise etwa 50% und mehr.

Vorzugsweise werden Konzentrationen von etwa 0,01 bis 50 Gew.-%, vorzugsweise etwa 0,1 bis 33 Gew.-% und insbesondere etwa 0,5 bis 15 Gew.-%, bezogen auf die Trennschicht, an Füllstoff eingesetzt. Es kann ein Material mit einer geringen Ölsadsorption verwendet werden. Ein hoher Füllstoffgehalt vermindert die Kosten der kostenintensiven Silikonschicht.

Der Füllstoff kann in Form von Primärteilchen oder Agglomeraten vorliegen, wobei auf den effektiven Teilchendurchmesser abzustellen ist. Die mittlere Teilchengröße beträgt vorzugsweise 0,01 bis 20 µm, insbesondere etwa 0,05 bis 10 µm, wobei eine mittlere Teilchengröße im Bereich von etwa 0,1 bis 8 µm besonders bevorzugt ist. Die Auftragsmenge der Polyorganosiloxan-Füllstoff-Mischung liegt üblicherweise im Bereich von etwa 0,3 bis 3,0 g/m², insbesondere bis 1,5 g/m², bezogen auf den Feststoffanteil.

Die Füllstoffkonzentration und Teilchengröße muß in Relation zur Beschichtungsdicke und den angestrebten Effekten auf die Adhäsion, Kohäsion und den Schälwert der Schicht ausgewählt werden. Durch Anpassen des Brechungsindexes des Füllstoffs an das Siliconsystem kann eine klare aufgerauhte Schicht erhalten werden, bei unterschiedlichen Brechungsindizes können durchscheinende Oberflächen erhalten werden. Wo ein transparentes Erscheinungsbild nicht wichtig ist, kann die durchscheinende Beschichtung ausgebildet werden, um das Schichtdeckvermögen der Folie auf der Schicht während des Beschichtungsverfahrens zu überprüfen. Um das Deckvermögen auf der zweiten Seite zu überprüfen, können Farbstoffe oder UV-Tracer verwendet werden.

Die Einbeziehung von Füllstoffteilchen in die Trennschicht führt dazu, daß die Grenzfläche zwischen Trennschicht und Funktionsschicht eine Rauhigkeit mit einer Rauhtiefe Rt von mindestens etwa 400 und einen Mittenrauhwert Ra von mindestens etwa 40 nm aufweist. Erfindungsgemäß beträgt Rt etwa 400 bis 50.000 nm, insbesondere 600 bis 2500 nm, und Ra etwa 40 bis 5000 nm, insbesondere etwa 77 bis 250 nm. Besonders bevorzugte Werte sind Rt von mindestens etwa 650 nm und Ra von mindestens etwa 80 nm.

Wenn die Rauhtiefe Rt von etwa 400 nm unterschritten wird, dann tritt bei der Herstellung des mehrschichtigen Verbundkörpers bzw. der mehrschichtigen Verbundfolie mehr oder weniger ein Blockiereffekt auf. Wird die Rauhtiefe Rt von 50.000 nm überschritten, dann ist die Trennschicht zu dick bzw. auch zu rauh mit der Folge, daß bei späteren Beschichtungsvorgängen zuviel Material verlorengehen würde, das in die zu tiefen Täler der stark aufgerauhten Trennschicht eindringen würde. Entsprechende Erwägungen gelten für die Rahmenbedingungen des Mittenrauhwertes Ra.

Als Rauhtiefe Rt wird der Abstand von Grund- und Bezugsprofil eines Oberflächenprofils bezeichnet, d.h. der maximale Berg-Tal-Abstand. Der Mittenrauhwert Ra ist der mittlere absolute Abstand zwischen Bezugsprofil und Ist-Profil, der auch als CLA (Center line average) bezeichnet wird, d.h. das arithmetrische Mittel der Abweichungen des Profils von einer Mittellinie. Für die Zwecke der Erfindung wurden Rt bzw. Ra mittels eines FORM TALYSURF LASER (von RANK TAYLOR HOBSON Inc.) ermittelt. Die Rauhigkeitsbestimmung erfolgte gemäß BS 1134.

Die mittlere Schichtdicke der Trennschicht beträgt vorzugsweise bis zu etwa 3 g/m², insbesondere bis zu etwa 1,5 g/m² (bezogen auf Feststoffanteil). Die Angabe der Schichtdicke "in g/m²" macht eine Aussage über die praktische bzw. kommerzielle Auftragsmenge. Diese Angabe wird üblicherweise bei Filmsubstraten herangezogen. Sie bedeutet, daß beispielsweise die bevorzugte Schichtdicke von etwa 0,5 bis 2 µm einer Auftragsmenge von 0,5 bis 2 g/m² (bezogen auf Trockensubstanz bzw. ausgetrocknetem fertigen Auftrag) entspricht.

Kommerzielle Polysiloxansysteme können in lösungsmittelhaltige, auch wäßrige Systeme, und lösungsmittelfreie Systeme unterteilt werden, die thermisch, durch UV-Licht, durch Elektronenstrahlen gehärtet bzw. vernetzt werden können. Zum Aufbringen dieser Polysiloxan enthaltenden Schichten auf den flexiblen Träger können klassische Verfahren verwendet werden: Tiefdruck (direkt, indirekt, Walzenauftrag mit mehreren Walzen), Meyer-Rakel, Umkehrwalzenbeschichtung (Reverse-Roll), Mehrfachwalzenbeschichtung (z.B. 5-Walzenbeschichter) etc. Im Anschluß an den Auftrag der Polysiloxanschicht wird diese einer Vernetzung unterzogen.

Die vernetzbaren Polyorganosiloxansysteme stellen fließfähige Materialien dar, welche funktionelle Gruppen enthalten, für die eine Vielzahl von Vernetzungsmöglichkeiten besteht. Sie sind insbesondere einer thermischen, durch UV-Licht oder durch Elektronenstrahlen induzierten Vernetzung zugänglich. Außerdem können Vernetzungskatalysatoren, wie Peroxide, Azo-Verbindungen oder metallorganische Verbindungen, zugesetzt werden. Technisch sehr bedeutsam ist die sogenannte peroxidische Vernetzung unter Zuhilfenahme von Radikalbildnern, wie z.B. Bis-(2,4-dichlorbenzoyl)-peroxid, Dibenzoylperoxid, Dicumylperoxid, tert-Butylperbenzoat oder 2,5-Bis-(tert-butyl-peroxy)-2,5-dimethylhexan.

Als vernetzbare Polyorganosiloxansysteme kommen ferner Polyorganosiloxane in Betracht, die pro Molekül mindestens zwei an Si-Atome gebundene Alkenyl- oder Aralkenylgruppen enthalten. Als Beispiel sind Polyalkylalkenylsiloxane oder Polyarylalkenylsiloxane zu nennen. In diesem Fall liegt die Zahl von Kohlenstoffatomen in der Alkylgruppe vorzugsweise im Bereich von 1 bis 18. Bevorzugte Beispiele für Alkyl- oder Arylgruppen sind Methyl und Phenyl. Beispiele der Alkenylgruppen sind Vinyl und Allyl. Das molare Verhältnis der Alkyl- bzw. Arylgruppen zu den Alkenylgruppen im Polyalkylalkenylsiloxan bzw. Polyarylalkenylsiloxan liegt vorzugsweise im Bereich von 0,02 bis 0,3 mol-%. Als Vernetzungskatalysator können Katalysatoren vom Platintyp, z.B. Chloroplatinsäure, eingesetzt werden, um die Polymerisation der Alkenylgruppen zu begünstigen.

Vinylgruppenhaltige Polyorganosiloxane lassen sich ferner mit Schwefel vernetzen. Der Gehalt an Vinylgruppen der vernetzenden Silicone sollte dabei 1 bis 4 mol-% und die Schwefelmenge 2% betragen.

Polyorganosiloxane lassen sich auch durch Additionsreaktion von Si-H an Doppelbindungen vernetzen. Die verwendeten Katalysatoren sind Edelmetallsalze und -komplexe, wobei den Platin-Derivaten die größte Bedeutung zukommt.

Mercaptofunktionelle Polysiloxane lassen sich photochemisch durch Anlagerung von HS-Gruppen an Allyl- oder Vinylgruppen in Gegenwart von Photoinitiatoren durchführen. Bevorzugte Mercaptoalkylreste weisen eine Kohlenstoffzahl im Bereich von 1 bis 4 auf, wobei die anderen organischen Reste der mercaptofunktionellen Polysiloxane bevorzugt zwischen 2 bis 3 Kohlenstoffatome aufweisen oder Phenyl sind. Das damit zur Reaktion zu bringende Methylvinylpolysiloxan trägt bevorzugt etwa 3 Vinylgruppen pro Molekül und wird in einer solchen Menge eingesetzt, daß sich 0,2 bis 1,0 Si-gebundene Vinylreste pro Si-gebundenem Mercaptoalkylrest ergeben. Gegebenenfalls kann ein üblicher Gelierinhibitor, wie z.B. Dihydroxyphenole und ihre Alkylderivate, sowie gegebenenfalls ein Photosensibilisator, wie z.B. aromatische Ketone, wie Acetophenon oder Benzophenon, oder Azoverbindungen, wie Azobisisobuttersäurenitril, einverleibt werden. Geeignete Systeme gehen z.B. aus der DE-PS 26 22 126 hervor.

Auch epoxifunktionelle Polyorganosiloxane können in Gegenwart von photochemisch z.B. aus p-Chlorbenzoldiazoniumhexafluorophosphat erzeugten Lewis-Säuren vernetzt werden. Auch acrylgruppenhaltige Silicone lassen sich photochemisch vernetzen.

Bevorzugte Verfahren bedienen sich einer UV-Bestrahlung. Die Gründe hierfür liegen darin, daß nur geringe Wärme eingesetzt wird und die Folie deshalb nicht der Gefahr des Verziehens ausgesetzt ist, wobei eine geringere Dicke eingesetzt werden kann. UV-vernetzbare Systeme haben üblicherweise eine niedrige Viskosität und können deshalb einfacher mit Additiven modifiziert werden. Der Vernetzungsmechanismus ist weitgehend unempfindlich gegen zugesetzte Additive. Größere Mengen Füllstoff können zugesetzt werden, ohne die Beschichtungsfähigkeit zu beeinflussen.

Die Vernetzung mit γ- und β-Strahlen läuft über die Bildung freier Radikale ab. Anstelle von γ-Strahlen kann auch mit Elektronenstrahlen gearbeitet werden.

Die Kondensationsvernetzung spielt ebenfalls eine Rolle bei der Vernetzung von Polyorganosiloxanen. Dabei reagiert eine an Silicium gebundene Hydroxylgruppe mit einer an Silicium gebundenen Gruppe R, die z.B. eine Alkoxy-, Acyloxy-, Amino-, Hydroxy-, Oximo- oder Amido-Gruppe R sein kann, unter Abspaltung von HR. Je nach Aktivität des Vernetzers läuft die Reaktion dabei mit oder ohne Katalysatoren ab, so daß sich entweder Zwei-Komponentensysteme oder Ein-Komponentensysteme formulieren lassen. Die handelsüblichen Vernetzer bestehen meist aus Gemischen aus Kieselsäureestern und Zinn-Katalysatoren, wie z.B. Dibutylzinndiacetat, Dioctylzinnmaleinat, Zinn-(II)octoat oder Umsetzungsprodukte dieser Komponenten, oder mehrwertigen Isocyanaten.

Eine Si-H-Gruppe kann in Gegenwart basischer Katalysatoren oder von Sn- und Pt-Verbindungen mit Silanolgruppen unter Wasserstoffentwicklung reagieren.

Durch Wahl von Art und Menge der Polysiloxanausgangsmaterialien kann die Releasefähigkeit der Trennschicht moduliert werden. Dieser Aspekt ist besonders wichtig, wenn ein Schichtverbund mit mehreren Funktionsschicht/Trennschicht-Grenzflächen vorliegt, die in vorbestimmter Reihenfolge gelöst werden sollen. Dieser Fall tritt regelmäßig ein, wenn das Verbundmaterial zu einer Rolle aufgewickelt wird. Für das ordnungsgemäße Abrollen ist es unerläßlich, daß die Funktionsschicht zur nächsten Windung eine geringere Haftung zeigt als zur zugeordneten Trennschicht. Zu diesem Zweck ist es bevorzugt, daß auf der Rückseite des Hilfsträgers eine weitere Trennschicht ausgebildet wird, die eine höhere Releasefähigkeit aufweist (Trennschicht mit 100% Release) als die zwischen Hilfsträger und Funktionsschicht befindliche (Trennschicht mit kontrolliertem Release). Diese rückseitige Trennschicht wird vorzugsweise ebenfalls erfindungsgemäß erhalten. Eine derartige Ausbildung einer rückseitigen Trennschicht ist auch bevorzugt, um den Transport des Verbundkörpers über Walzen und glatte Oberflächen zu erleichtern.

Der Hilfsträger ist vorzugsweise eine Kunststoffolie, insbesondere aus einem thermoplastischen Material. Geeignet sind auch Papierträger und im Stand der Technik bekannte andere Trägermaterialien. Besonders geeignete Kunststoffolien bestehen z.B. aus thermoplastischen Polyestern oder Polyolefinen. Besonders geeignete Ausgangsmaterialien hierfür sind unter anderem: Polyalkylenterephthalate, wie z.B. Polyethylenterephthalat, Polybutylenterephthalat oder Poly(1,4-cyclohexandimethylenterephthalat). Polyethylene, Polypropylene, Polybutene, Polyisobutene, Polystyrol, Cellulosederivate, wie insbesondere Celluloseacetate, Cellulosebutyrate und Cellulosepropionate und Coextrudate von z.B. Polyethylen/Polypropylen und Laminate von z.B. Papier und Polyethylen, Polyvinylacetat, Polyvinylchlorid, Polyvinylalkohol, Polyvinylbutyral, Polyamid. Ethylen-Vinylacetat-Copolymerisat, PEN, Acrylnitril/Butadien/Styrol-Copolymerisat (ABS), Acrylnitril/Styrol/Acrylester-Copolymerisat (ASA), Styril/Acrylnitril-Copolymerisat (SAN), Polycarbonate, Polyimide, PEEK, Nylon, zu nennen. Bevorzugte Folien sind etwa 2 bis etwa 400 µm, insbesondere etwa 3,5 bis 100 µm und besonders bevorzugt etwa 3,5 bis 50 µm dick.

Bei der Herstellung von mit Silicon beschichteten Verbundmaterialien mit einem Papierträger hat es sich gezeigt, daß bei der Herstellung auf einem Walzensystem (beliebiges Beschichtungssystem) aufgrund des Lufteinschlusses von Papier keine wesentlichen Probleme auftreten. Anders verhält es sich, wenn der Papierträger durch einen Kunststoff- bzw. Filmträger ersetzt wird, der keine Lufteinschlüsse aufweist, sondern eine glatte Oberfläche. Hier tritt eine Art "Radier- bzw. Gummieffekt" auf, so daß die beschichtete Bahn nicht in der wünschenswerten Weise über die verschiedenen Walzen des Beschichtungssystems geführt werden kann. So kann beispielsweise aufgrund dieses Effektes ein nachteiliges Blockieren auftreten. Wenn dieses Material in eine Jumborolle überführt wird, dann treten zusätzlich unerwünschte Spannungen im Film auf, wodurch die gewünschte "Flachheit" der beschichteten Filme teilweise behoben wird (kräuselig). Diese unerwünschten Erscheinungen wirken sich weitergehend nachteilig aus, wenn die Verbundfilme bzw. Laminate später beispielsweise mit einem Klebstoff beschichtet werden sollen, und treten insbesondere im Zusammenhang mit dem Beschichten von Polyolefinfilmen, die gegenüber beispielsweise Polyesterfilmen eine größere Elastizität haben, auf. Diese Probleme werden durch die Einverleibung von Pigmenten gemäß der Erfindung vollständig behoben.

Die Erfindung weist außerdem folgende Vorteile auf: Durch die Oberflächenrauhigkeit der Trennschicht werden vielfältige Nachteile der Trennschichten bekannter Verbundgebilde vermieden bzw. zumindest minimiert. Beim Gleiten feststehender Oberflächen oder Rollen ist die Kontaktfläche zum erfindungsgemäßen Verbundkörper stark minimiert, was das Entstehen von Reibungselastizität stark zurückdrängt. Somit weist die Trennschicht ein besseres Gleitverhalten an statischen Oberflächen auf, was zu verminderter elektrostatischer Aufladung und zur Verminderung bzw. zum Ausschluß der damit verbundenen Probleme bzw. zum Ausschluß der Oxidation der Oberflächenoberfolie aufgrund elektrostatischer Entladung und der dadurch hervorgerufenen Unregelmäßigkeiten der anschließend aufgebrachten Beschichtungen führt. Beim Gleiten entlang feststehender Oberflächen oder Rollen ist also die Kontaktfläche zum erfindungsgemäßen Verbundkörper stark vermindert, was die Entstehung von Reibungselektrizität stark zurückdrängt.

Bei der Herstellung des erfindungsgemäßen Verbundkörpers ist der Transport des Hilfsträgers über Walzen oder entlang glatter Oberflächen erleichtert. Bei Anwendungen, bei denen der erfindungsgemäße Verbundkörper zum temporären Bedecken einer Haftkleberschicht verwendet wird, kommt diese nur mit den "Bergen" der rauhen Trennschicht in Berührung, wobei die geringere Kontaktfläche ein leichteres Abtrennen bzw. leichteres Release vom Verbundkörper ermöglicht. Bei Anwendungsfällen, bei denen auf dem Träger eine Funktionsschicht aus einer Schmelze, Lösung und/oder Dispersion erzeugt wird, wird nach dem Trennen vom Träger eine wünschenswert matte Oberfläche der Funktionsschicht erreicht. Als Beispiel läßt sich ein mehrschichtiges Korrekturband anführen, das zum Abdecken fehlerhafter Schriftzeichen dient. Die nach der Trennung vom Hilfsträger freiliegende Oberfläche der Funktionsschicht stellt ein "Negativ" der Trennschichtoberfläche dar. Es wird somit eine mattierte bzw. aufgerauhte Oberfläche der Funktionsschicht erhalten. Die mikroskopisch rauhe Oberfläche erscheint dem Betrachter angenehm matt. Sie läßt sich z.B. im Falle eines Korrekturbandes leicht wieder beschriften, wobei beim Beschriften mit Tinte oder Tusche die Gefahr des Verwischens vermindert bzw. gar ausgeschlossen ist und insbesondere das Beschriften mit einem Bleistift erleichtert wird, da aufgrund der Oberflächenrauhigkeit ein verbesserter Abrieb der Bleistiftmine erfolgt.

Von besonderem Vorteil erweist es sich bei der Erfindung, daß die Einsatzmenge an Polyorganosiloxan im Vergleich zu nicht-füllstoffhaltigen Trennschichten erheblich vermindert werden kann, was einen bedeutsamen Kostenvorteil darstellt. Ein herausstechender Vorteil besteht darin, daß die Funktionsschicht eines mehrschichtigen Verbundkörpers mit minimalem Kraftaufwand abgelöst werden kann, wobei die Funktionsschicht nach der Trennung den wünschenswerten Grad an "Mattigkeit" ihrer Oberfläche zeigt. Ein weiterer herausragender Vorteil, ebenfalls bereits angesprochen, besteht darin, daß der mehrschichtige Verbundkörper gemäß der Erfindung sehr leicht über Rollen oder feststehende Oberflächen gleitet, z.B. in Farbbandkassetten oder Abspulgeräten. Mit Nachdruck soll darauf hingewiesen werden, daß die Erfindung sämtliche Lehren, die eingangs im Zusammenhang mit dem Stand der Technik geschildert wurden, verbessert. Somit sollen diese bekannten Lehren, sjeweils erfindungsgemäß weitergebildet, ebenfalls Gegenstand der vorliegenden Erfindung sein.

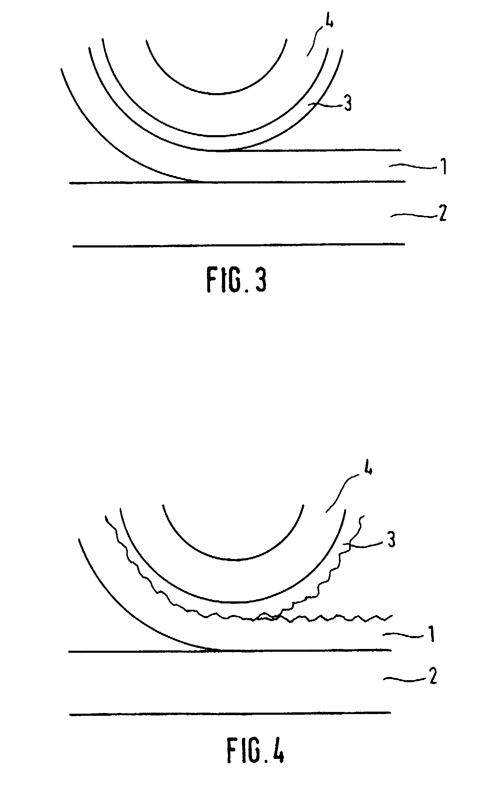

Die Oberflächenrauhigkeit der Trennschicht kann außerdem mit Vorteil genutzt werden, die Anfangshaftung der übertragenen Haftkleberschicht zu steuern. Dies ist in den Figuren 3 und 4 schematisch dargestellt. Dort ist die Übertragung einer Haftkleberschicht auf ein Papiersubstrat 2 dargestellt, wobei die Haftkleberschicht 1 in Figur 3 von einem üblichen Trägermaterial 4 mit bzw. einer glatten Trennschicht 3 und in Figur 4 mit einer erfindungsgemäß aufgerauhten Trennschicht 3 abgelöst wird. Die Sofortklebehaftung der rauhen Seite der übertragenen Klebstoffschicht ist herabgesetzt, da die Kontaktfläche mit einem zweiten Substrat auf die "Spitzen" der Klebstoffschicht beschränkt ist. Dies gestattet z.B. das Abziehen und das Neupositionieren in einem solchen Falle, bei dem erste Positionierung nicht korrekt war. Beim Andrücken wird die viskose Schmelzkleberschicht jedoch zusammengedrückt, so daß eine vergleichbare Endklebekraft wie bei dem in Figur 3 dargestellten Fall erreicht wird.

Die Erfindung wird durch die anliegenden Zeichnungen und folgenden Beispiele noch näher erläutert:

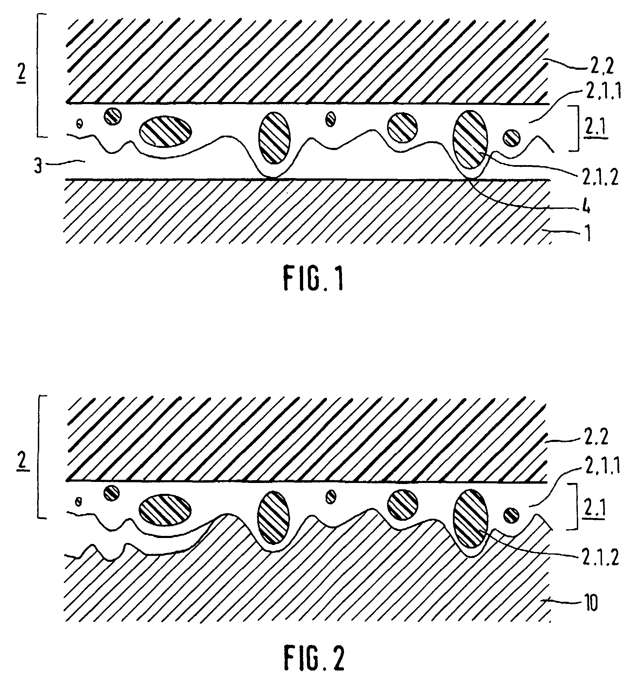

Figur 1 stellt eine Ausführungsform der Erfindung dar, bei der eine Funktionsschicht mit glatter Oberfläche 1 lediglich mit den "Bergen" der rauhen Trennschicht 2.1 des zusätzlich einen flexiblen Hilfsträger 2.2 aufweisenden mehrschichtigen Verbundkörpers 2 in Berührung kommt, so daß luftgefüllte Zwischenräume 3 entstehen. Die geringe Kontaktfläche 4 erlaubt ein leichtes Abtrennen der Funktionsschicht vom Verbundkörper 2. Die Trennschicht enthält eine ein vernetztes Polyorganosiloxan enthaltende kontinuierliche Phase 2.1.1 und einen teilchenförmigen Füllstoff 2.1.2.

Figur 2 stellt eine rauhe Funktiosschicht 10 dar, die sich in völligem Kontakt mit der Trennschicht 2.1 befindet, die eine ein vernetztes Polyorganosiloxan enthaltende kontinuierliche Phase 2.1.1 und einen teilchenförmigen Füllstoff 2.1.2 enthält. Die Trennschicht 2.1 und der Hilfsträger 2.2 bilden zusammen den erfindungsgemäßen Verbundkörper 2. Nach der Trennung von Funktionsschicht und Trennschicht (angedeutet auf der linken Seite von Fig. 2) stellt die nunmehr freiliegende Oberfläche der Funktionsschicht ein "Negativ" der Trennschichtoberfläche dar. Hiermit wird eine mattierte bzw. aufgerauhte Oberfläche der Funkionsschicht erhalten.

In den folgenden Beispielen wurden durch Mischen der jeweils angegebenen Bestandteile Beschichtungsmassen hergestellt. Diese wurden durch Umkehrbeschichtung auf eine Polyesterfolie der Dicke von 20 µm aufgetragen. Die erhaltenen Beschichtungen der Beispiele 1 bis 3 wurden einer UV-Härtung unterzogen. Die Siliconbeschichtung von Beispiel 4 wurde mittels Elektronenstrahlung gehärtet. Die Beschichtungen der Beispiele 5 bis 7 wurden thermisch gehärtet, indem sie etwa 10 s auf 110°C erwärmt wurden. Anschließend wurden die Reibungskoeffizienten der erhaltenen Trägermaterialien gemäß ASTM D1894/87 gemessen. Ein niedriger Wert der Reibungskoeffizienten weist auf eine geringe Reibung beim Transport über Walzen und glatte Oberflächen auf und führt zu den damit verbundenen, in der Beschreibung dargelegten Vorteilen. In dieser Ausführungsform ist es vorteilhaft, wenn beide Seiten des flexiblen Hilfsträgers mit der Trennschicht beschichtet sind, so daß auch die nicht mit einer Funktionsschicht in Kontakt stehende rückwärtige Seite des Verbundkörpers mit einer Trennschicht versehen ist. Die experimentell ermittelte Rauhtiefe Rt lag jeweils im Bereich von etwa 400 bis 50000 nm und der Mittenrauhwert Ra im Bereich von etwa 40 bis 5000 nm.

| Beispiel 1 - Trennschicht mit 100% Release ohne Füllmaterial (UV-System) - Vergleichsbeispiel | | | |
|---|---|---|---|
| Zu Additionsreaktionen befähigtes lösungsmittelfreies Methylpolysiloxan | UV 9500 | G.E. Silicones Co. | 15,0 Gew.-Teile |
| " | UV 9400 | G.E. Silicones Co. | 15,0 Gew.-Teile |
| Photoinitiator | UV 9380C | G.E. Silicones Co. | 0,6 Gew.-Teile |
| Haftreibungskoeffizient: -*) | | | |
| Gleitreibungskoeffizient: -*) | | | |

| | | | |
|---|---|---|---|
| *) Die Werte lagen außerhalb des Meßbereichs, Wert > 3,0 | | | |

| Beispiel 2 - Trennschicht mit 100% Release mit Füllstoff (UV-härtbar) | | | |
|---|---|---|---|
| Zu Additionsreaktionen befähigtes lösungsmittelfreies Methylpolysiloxan | UV 9500 | G.E. Silicones Co. | 15,0 Gew.-Teile |
| " | UV 9400 | G.E. Silicones Co. | 15,0 Gew.-Teile |
| Photoinitiator | UV 9380C | G.E. Silicones Co. | 0,6 Gew.-Teile |
| Siliciumdioxid, Teilchendurchmesser etwa 2 µm | Syloid® 244 | Grace GmbH | 1,2 Gew.-Teile |
| Haftreibungskoeffizient: 0,27 | | | |
| Gleitreibungskoeffizient: 0,28 | | | |

| Beispiel 3 - Trennschicht mit kontrolliertem Release mit Füllmaterial (UV-härtbar) | | | |
|---|---|---|---|
| Zu Additionsreaktionen befähigtes lösungsmittelfreies Methylpolysiloxan | UV 9500 | G.E. Silicones Co. | 15,0 Gew.-Teile |
| " | UV 9400 | G.E. Silicones Co. | 15,0 Gew.-Teile |
| Release kontrollierendes Agens | UV 9430 | G.E. Silicones Co. | 70,0 Gew.-Teile |
| Photoinitiator | UV 9380C | G.E. Silicones Co. | 2,0 Gew.-Teile |
| Siliciumdioxid, Teilchendurchmesser etwa 7 nm | Aerosil®380 | Degussa AG | 3,0 Gew.-Teile |
| Haftreibungskoeffizient: 0,18 | | | |
| Gleitreibungskoeffizient: 0,23 | | | |

| Beispiel 4 - Trennschicht mit 100% Release mit Füllstoff (elektronenstrahlgehärtet) | | | |
|---|---|---|---|
| Zu Additionsreaktionen befähigtes lösungsmittelfreies Methylpolysiloxan | RC-450 | TH Goldschmidt AG | 100 Gew.-Teile |
| amorphes Siliciumdioxid, Teilchendurchmesser etwa 3 µm | Syloid ED3® | Grace GmbH | 2 Gew.-Teile |
| Haftreibungskoeffizient: 0,22 | | | |
| Gleitreibungskoeffizient: 0,28 | | | |

| Beispiel 5 - Trennschicht mit 100% Release mit Füllmaterial (thermisches Härten) | | | |
|---|---|---|---|
| Zu Additionsreaktionen befähigtes vorkatalysiertes, lösungsmittelfreies Polysiloxan mit funktionellen Gruppen | Dow 7702® | Dow Corning Corp. | 100 Gew.-Teile |
| Vernetzungsmittel | Dow 7215® | Dow Corning Corp. | 6 Gew.-Teile |
| Reines Siliciumdioxid, Teilchendurchmesser etwa 4-8 µm | TK 900 | Degussa AG | 2 Gew.-Teile |
| Haftreibungskoeffizient: 0,24 | | | |
| Gleitreibungskoeffizient: 0,26 | | | |

| Beispiel 6 - Trennschicht mit kontrolliertem Release mit Füllmaterial (thermisches Härten) | | | |
|---|---|---|---|
| Zu Additionsreaktionen befähigtes lösungsmittelfreies Methylpolysiloxan | Dehesive 920® | Wacker GmbH | 27,0 Gew.-Teile |
| Release kontrollierendes Agens | CRA 17 | Wacker GmbH | 33,0 Gew.-Teile |
| Vernetzungsmittel | Vernetzer 24 | Wacker GmbH | 2,4 Gew.-Teile |
| Katalysator | Katalysator OL | Wacker GmbH | 1,05 Gew.-Teile |
| Haftvermittler | HF 86 | Wacker GmbH | 0,27 Gew.-Teile |
| Hydrophober Quarzstaub, Teilchendurchmesser etwa 4 µm | HDK H-15 | Wacker GmbH | 0,60 Gew.-Teile |
| Haftreibungskoeffizient: 0,30 | | | |
| Gleitreibungskoeffizient: 0,33 | | | |

| Beispiel 7 - Trennschicht mit 100% Release mit Füllmaterial (thermisches Härten) | | | |
|---|---|---|---|
| Zu Kondensationspolymerisation befähigtes Polymethylpolysiloxan | Dehesive 810 | Wacker GmbH | 15,0 Gew.-Teile |
| Lösungsmittel | White Spirit | | 84,0 Gew.-Teile |
| Vernetzungsmittel | V 83 | Wacker GmbH | 0,7 Gew.-Teile |
| Katalysator | C 80 | Wacker GmbH | 0,3 Gew.-Teile |
| Alumosilicatton, Teilchendurchmesser etwa 0,4 µm | Huber 95 | Huber Co. | 0.3 Gew.-Teile |
| Haftreibungskoeffizient: 0,30 | | | |
| Gleitreibungskoeffizient: 0,33 | | | |

## Patentansprüche

1. Mehrschichtiger Verbundkörper, aufweisend einen flexiblen Hilfsträger und eine auf mindestens einer Seite des Hilfsträgers angeordnete Trennschicht, die die vollständige Trennung oder die lokal begrenzte Ablösung einer hiermit in flächigem Kontakt befindlichen Funktionsschicht modifiziert, dadurch gekennzeichnet, daß die Trennschicht eine kontinuierliche Phase und einen teilchenförmigen Füllstoff in einer Konzentration von etwa 0,01 bis 50 Gew.-%, bezogen auf die Trennschicht, enthält, wobei die Oberfläche der Füllstoffteilchen vollständig von der kontinuierlichen Phase bedeckt ist, die kontinuierliche Phase vernetztes Polyorganosiloxan enthält und die Rauhigkeit der dem Hilfsträger abgewandten Oberfläche der Trennschicht eine Rauhtiefe Rt von etwa 400 bis 50000 nm und einen Mittenrauhwert Ra von etwa 40 bis 5000 nm aufweist.

2. Verbundkörper nach Anspruch 1, dadurch gekennzeichnet, daß die mittlere Schichtdicke der Trennschicht bis zu etwa 3 g/m² (bezogen auf Trockensubstanz), insbesondere 0,05 bis 2 g/m², beträgt.

3. Verbundkörper nach einem der Ansprüche 1 oder 2, dadurch gekennzeichnet, daß die Teilchengröße des Füllstoffs etwa 0.01 bis 20 µm beträgt.

4. Verbundkörper nach Anspruch 3, dadurch gekennzeichnet, daß die Teilchengröße des Füllstoffs im Bereich von etwa 0.05 bis 10 µm liegt.

5. Verbundkörper nach einem der Ansprüche 1 oder 2, dadurch gekennzeichnet, daß die mittlere Teilchengröße des Füllstoffs im Bereich von etwa 0,1 bis 8 µm liegt.

6. Verbundkörper nach einem der Ansprüche 1 bis 5, dadurch gekennzeichnet, daß die Rauhtiefe Rt etwa 600 bis 2500 nm und der Mittenrauhwert etwa Ra 77 bis 250 nm beträgt.

7. Verbundkörper nach einem der Ansprüche 1 bis 6, dadurch gekennzeichnet, daß die Rauhtiefe Rt mindestens etwa 650 nm und der Mittenrauhwert Ra mindestens etwa 80 nm beträgt.

8. Verbundkörper nach einem der Ansprüche 1 bis 7, dadurch gekennzeichnet, daß der teilchenförmige Füllstoff Calciumcarbonat, Diatomeenerde, Tone, hohle Glasperlen, Aluminiumsilikat, Plaster, Magnesiumcarbonat, teilchenbildende polymere Materialien, insbesondere PTFE, Talk, Fasern, Calcit, Kalk, Glimmer, amorphes Siliciumdioxid und/oder Silikate umfaßt.

9. Verbundkörper nach einem der Ansprüche 1 bis 8, dadurch gekennzeichnet, daß der Hilfsträger eine Kunststoffolie ist.

10. Verbundkörper nach Anspruch 9, dadurch gekennzeichnet, daß die Kunststoffolie aus thermoplastischem Polyester und/oder Polyolefin besteht.

11. Verbundkörper nach einem der vorstehenden Ansprüche, dadurch gekennzeichnet, daß das vernetzte Polyorganosiloxan durch radikalische Vernetzung eines Polyorganosiloxans hergestellt ist, das pro Molekül mindestens zwei an Si-Atome gebundene Alkenylgruppen enthält.

12. Verbundkörper nach einem der Ansprüche 1 bis 11, dadurch gekennzeichnet, daß das vernetzte Polyorganosiloxan durch Vernetzung eines Polyorganosiloxans mit an Si-Atomen gebundenen H-Atomen und eines Polyorganosiloxans mit an Si-Atomen gebundenen Alkenylgruppen erhalten ist.

13. Verbundkörper nach einem der Ansprüche 1 bis 11, dadurch gekennzeichnet, daß das vernetzte Polyorganosiloxan aus einem Polyorganosiloxan hergestellt ist, das zu Silanolgruppen hydrolysierbare Gruppen enthält.

14. Verbundkörper nach einem der Ansprüche 1 bis 13, dadurch gekennzeichnet, daß er auf der Trennschicht zusätzlich eine Funktionsschicht aufweist.

15. Verbundkörper nach Anspruch 14, dadurch gekennzeichnet, daß die Funktionsschicht eine Klebstoffschicht, eine transparente oder gefärbte Kunststoffschicht, insbesondere eine pigmentierte Kunststoffschicht, ein Laminat aus einer Klebstoffschicht und einer trasparenten oder gefärbten, insbesondere pigmentierten Schicht, ist.

16. Verfahren zur Herstellung eines mehrschichtigen Verbundkörpers nach einem der Ansprüche 1 bis 14, bei dem ein Gemisch aus einem vernetzungsfähige Gruppen enthaltenden Polyorganosiloxan mit einem teilchenförmigen Füllstoff nach an sich bekannten Verfahren auf einen flexiblen Hilfsträger aufgebracht und anschließend eine Vernetzung des Polyorganosiloxans vorgenommen wird.

17. Verfahren nach Anspruch 15, dadurch gekennzeichnet, daß die Vernetzung thermisch, mittels UV-Licht oder Elektronenstrahlung vorgenommen wird.

## Claims

1. Multi-layer composite body with a flexible auxiliary carrier and a separation layer arranged on at least one side of the auxiliary carrier, said separation layer modifying the complete or locally limited separation of a functional layer in flat contact with same, characterized in that the separation layer contains a continuous phase and a particle-like filler substance in a concentration of approximately 0.01 to 50% by weight relative to the separation layer, whereby the surface of the filler substance particles is completely covered by the continuous phase, the continuous phase contains an interlinked polyorganosiloxane and the roughness of the separation layer surface facing away from the auxiliary carrier has a roughness depth Rt of approximately 400 to 50000 nm and an average roughness Ra value of approximately 40 to 5000 nm.

2. Composite body according to claim 1, characterized in that the average thickness of the separation layer is up to approximately 3 g/m² thick (relative to dry substance), specifically 0.05 to 2 g/m².

3. Composite body according to claim 1 or 2, characterized in that the particle size of the filler substance is approximately 0.01 to 20 µm.

4. Composite body according to claim 3, characterized in that the particle size of the filler substance lies within a range of approximately 0.05 to 10 µm.

5. Composite body according to one of claims 1 or 2, characterized in that the average particle size of the filler substance lies within a range of approximately 0.1 to 8 µm.

6. Composite body according to one of claims 1 to 5, characterized in that the roughness depth Rt is approximately 600 to 2500 nm and the average roughness value approximately Ra 77 to 250 nm.

7. Composite body according to one of claims 1 to 6, characterized in that the roughness depth Rt is at least approximately 650 nm and the average roughness value Ra at least approximately 80 nm.

8. Composite body according to one of claims 1 to 7, characterized in that the particle-like filler substance comprises calcium carbonate, diatomaceous earth, clays, hollow glass pearls, aluminum silicate, plastics, magnesium carbonate, particle-forming polymer materials, specifically PTFE, talc, fibers, calcite, lime, mica, amorphous silicone dioxide and/or silicates.

9. Composite body according to one of claims 1 to 8, characterized in that the auxiliary carrier is a plastic foil.

10. Composite body according to claim 9, characterized in that the plastic foil is made of thermoplastic polyester and/or polyolefin.

11. Composite body according to one of the preceding claims, characterized in that the interlinked polyorganosiloxane is produced by radical interlinking of a polyorganosiloxane containing per molecule at least two alkyl-groups bonded to Si-atoms.

12. Composite body according to one of claims 1 to 11, characterized in that the interlinked polyorganosiloxane is obtained by interlinkage of an polyorganosiloxane with H-atoms bonded to Si-atoms and a polyorganosiloxane with alkenyl-groups bonded to Si-atoms.

13. Composite body according to one of claims 1 to 11, characterized in that the interlinked polyorganosiloxane is produced from a polyorganosiloxane which contains groups capable of being hydrolyzed to silanol groups.

14. Composite body according to one of claims 1 to 13, characterized in that it has, additionally, a functional layer on the separation layer.

15. Composite body according to claims 14, characterized in that the functional layer is an adhesive layer, a transparent or tinted plastic layer, specifically a pigmented plastic layer, a laminate from an adhesive layer and a transparent or tinted, specifically a pigmented layer.

16. Method for the manufacture of a multi-layer composite body according to one of claims 1 to 14, in which a mixture of a polyorganosiloxane, containing interlinkable groups with a particle-like filler substance, is applied according to a known method onto a flexible auxiliary carrier and interlinkage of the polyorganosiloxane is subsequently realized.

17. Method according to claim 15, characterized in that interlinkage is realized thermally by means of UV light or ionic beam.

## Revendications

1. Corps composite multicouche, présentant un support auxiliaire flexible et, disposée sur au moins un côté du support auxiliaire, une couche de séparation qui modifie la séparation totale ou le décollement, limité localement, d'une couche de fonction se trouvant en contact avec elle sur une surface étendue, caractérisé en ce que la couche de séparation contient une phase continue et une charge en particules à une concentration d'environ 0,01 à 50 % en poids par rapport à la couche de séparation, de façon telle que la surface des particules de charge est totalement recouverte par la phase continue, la phase continue contient un polyorganosiloxane réticulé et la rugosité de la surface de la couche de séparation opposée au support auxiliaire présente une profondeur de rugosité Rt d'environ 400 à 50 000 nm et une valeur rugosimétrique moyenne Ra d'environ 40 à 5000 nm.

2. Corps composite suivant la revendication 1, caractérisé en ce que l'épaisseur moyenne de la couche de séparation s'élève jusqu'à environ 3 g/m² (sur la base de la substance sèche), notamment de 0,05 à 2 g/m².

3. Corps composite suivant l'une des revendications 1 et 2, caractérisé en ce que le diamètre des particules de la charge s'élève à environ 0,01-20 µm.

4. Corps composite suivant la revendication 3, caractérisé en ce que le diamètre des particules de la charge se situe dans la plage d'environ 0,05 à 10 µm.

5. Corps composite suivant l'une des revendications 1 et 2, caractérisé en ce que le diamètre moyen des particules de la charge se situe dans la plage d'environ 0,1 à 8 µm.

6. Corps composite suivant l'une des revendications 1 à 5, caractérisé en ce que la profondeur de rugosité Rt s'élève à une valeur d'environ 600 à 2500 nm et la valeur rugosimétrique moyenne Ra s'élève à environ 77-250 nm.

7. Corps composite suivant l'une des revendications 1 à 6, caractérisé en ce que la profondeur de rugosité Rt s'élève à une valeur d'au moins 650 nm et la valeur rugosimétrique moyenne Ra s'élève au moins à environ 80 nm.

8. Corps composite suivant l'une des revendications 1 à 7, caractérisé en ce que la charge en particules comprend du carbonate de calcium, de la terre de diatomées, des argiles, des billes creuses de verre, du silicate d'aluminium, du plâtre, du carbonate de magnésium, des matières polymères formant des particules, en particulier du PTFE, du talc, des fibres, de la calcite, du calcaire, du mica, du dioxyde de silicium amorphe et/ou des silicates.

9. Corps composite suivant l'une des revendications 1 à 8, caractérisé en ce que le support auxiliaire est une feuille de matière plastique.

10. Corps composite suivant la revendication 9, caractérisé en ce que la feuille de matière plastique est constituée de polyester thermoplastique et/ou d'une polyoléfine.

11. Corps composite suivant l'une des revendications précédentes, caractérisé en ce que le polyorganosiloxane réticulé est produit par réticulation radicalaire de polyorganosiloxane qui contient par molécule au moins deux groupes alcényle liés à des atomes de silicium.

12. Corps composite suivant l'une des revendications 1 à 11, caractérisé en ce que le polyorganosiloxane réticulé est obtenu par réticulation d'un polyorganosiloxane portant des atomes d'hydrogène liés à des atomes de silicium et d'un polyorganosiloxane portant des groupes alcényle liés à des atomes de silicium.

13. Corps composite suivant l'une des revendications 1 à 11, caractérisé en ce que le polyorganosiloxane réticulé est produit à partir d'un polyorganosiloxane qui contient des groupes hydrolysables en groupes silanol.

14. Corps composite suivant l'une des revendications 1 à 13, caractérisé en ce qu'il présente en outre une couche de fonction sur la couche de séparation.

15. Corps composite suivant la revendication 14, caractérisé en ce que la couche de fonction est une couche d'adhésif, une couche de matière plastique transparente ou colorée, en particulier une couche de matière plastique pigmentée, un stratifié d'une couche d'adhésif et d'une couche transparente ou colorée, en particulier pigmentée.

16. Procédé de production d'un corps composite multicouche suivant l'une des revendications 1 à 14, dans lequel un mélange d'un polyorganosiloxane contenant des groupes réticulables et d'une charge en particules est appliqué par des moyens connus sur un support auxiliaire flexible puis une réticulation du polyorganosiloxane est effectuée.

17. Procédé suivant la revendication 15, caractérisé en ce que la réticulation est effectuée par voie thermique, au moyen de lumière ultraviolette ou par un faisceau d'électrons.
